# EUROPÄISCHE PATENTSCHRIFT

(11) **EP 2 263 035 B1**
(45) Veröffentlichungstag und Bekanntmachung des Hinweises auf die Patenterteilung: **14.08.2013**
(21) Anmeldenummer: 09732225.9
(22) Anmeldetag: 12.03.2009
(51) Int. Cl.: F16M 11/36, F16M 11/34

(54) **STATIV**
TRIPOD
TREPIED

(30) Priorität: 14.04.2008 DE 102008018761
(43) Veröffentlichungstag der Anmeldung: 22.12.2010
(73) Patentinhaber: NEDO GmbH & Co. KG, 72280 Dornstetten (DE)
(72) Erfinder: FISCHER, Walter, H., 72280 Dornstetten (DE)
(74) Vertreter: RACKETTE Partnerschaft Patentanwälte
(86) Internationale Anmeldenummer: PCT/DE2009/000343
(87) Internationale Veröffentlichungsnummer: WO 2009/127180

(56) Entgegenhaltungen:
- GB-A- 2 130 289
- GB-A- 2 259 943
- US-A- 2 899 164
- US-A- 4 324 477

## Beschreibung

Die Erfindung betrifft ein Stativ mit drei Stativbeinen, die schwenkbar an einem Stativteller angebracht und in einer Schließstellung nahe beieinander angeordnet sowie über eine Koppelvorrichtung miteinander verbunden sind, wobei die Koppelvorrichtung wenigstens eine Verbindungsanordnung mit einem Andockstück und mit einem Gegenstück aufweist.

Ein derartiges Stativ ist aus US-A-4,324,477 bekannt. Das vorbekannte Stativ verfügt über drei Stativbeine, die schwenkbar an einem Stativteller angebracht und in einer Schließstellung nahe beieinander angeordnet sind. Die Stativbeine sind über eine Koppelvorrichtung miteinander verbunden, wobei die Koppelvorrichtung wenigstens eine Verbindungsanordnung mit einem Andockstück und mit einem Gegenstück aufweist. Jedes einem Stativbein zugeordnete Gegenstück ist C-artig ausgebildet, während das Andockstück als an dem jeweiligen Stativbein ausgebildete Vertiefung zur_klemmenden Aufnahme des Gegenstückes ausgebildet ist.

Ein weiteres Stativ ist beispielsweise aus dem Online-Katalog "Stative" der Anmelderin bekannt. Bei diesem drei Stativbeine aufweiseden Stativ sind die Stativbeine schwenkbar an einem Stativteller angebracht. In einer Schließstellung sind die Stativbeine nahe beieinander angeordnet und über eine als Riemen ausgebildete Koppelvorrichtung im Fußbereich der Stativbeine miteinander verbunden. Nachteilig bei dieser Ausgestaltung mit einer Koppelvorrichtung ist die verhältnismäßig umständliche Handhabung, die insbesondere bei häufig wechselnden Einsatzorten des Stativs störend ist, sowie das unausbleibliche Verschmutzen des Riemens bei der häufig vorkommenden Verwendung des Stativs auf feuchten oder matschigen Untergründen.

Der Erfindung liegt die Aufgabe zugrunde, ein Stativ der eingangs genannten Art anzugeben, das sich durch eine auch im rauen Einsatz einfach und ohne die Gefahr von Verschmutzungen einfach sowie bequem zu bedienende Koppelvorrichtung auszeichnet.

Diese Aufgabe wird bei einem Stativ der eingangs genannten Art erfindungsgemäß dadurch gelöst, dass mit der Verbindungsanordnung zwei einander benachbarte Stativbeine durch einen hintergriffsfreien Eingriff des Andockstückes sowie des Gegenstückes miteinander verbindbar sind, und dass die Koppelvorrichtung über eine Verriegelungsanordnung verfügt, die mit einem an einem weiteren Stativbein angeordnete, zwischen einer Verriegelungsstellung sowie einer Freigabestellung beweglichen Verriegelungsstück und mit Rastelementen ausgebildet ist, die an den dem weiteren Stativbein benachbarten Stativbeinen angeordnet sind und in der Schließstellung der Stativbeine mit dem Verriegelungsstück in dessen Verriegelungsstellung mit einem Hintergriff in Eingriff sind, so dass alle Stativbeine zueinander unbeweglich festgelegt sind.

Durch die Ausgestaltung der Koppelvorrichtung eines erfindungsgemäßen Stativs lassen sich zum Einnehmen der Schließstellung die mit einer Verbindungsanordnung ausgebildeten Stativbeine zunächst in eine räumlich zueinander festgelegte Anordnung bringen, um dann das mit dem Verriegelungsstück ausgebildete Stativbein ebenfalls anzunähern, bis das Verriegelungsstück in die Rastelemente einrastet. Dieser Vorgang erfolgt quasi automatisch ohne weiteren händischen Eingriff und ist nach Überführen des Verriegelungsstückes in die Freigabestellung ein Freigeben aller Stativbeine reversibel durchführbar.

Bei einer vorteilhaften Ausgestaltung eines erfindungsgemäßen Stativs weist die Verriegelungsanordnung eine Feder auf, die das Verriegelungsstück in der Verriegelungsstellung hält. Dadurch ist sichergestellt, dass die Schließstellung der Stativbeine nur willentlich gelöst werden kann.

Vorteilhafterweise sind bei einer Ausgestaltung eines erfindungsgemäßen Stativs das Andockstück mit einem Vorsprung und das Gegenstück mit einer Aufnahmeausnehmung für den Vorsprung des Andockstücks ausgebildet. Dadurch ist eine einfache lösbare mechanische Verbindung erzielt.

Bei einer zweckmäßigen Weiterbildung der vorgenannten Ausgestaltung eines erfindungsgemäßen Stativs sind das oder jedes Andockstück als ein Kugelkopf und das oder jedes Gegenstück als eine Kugelpfanne ausgebildet. Dadurch erfolgt eine sehr zuverlässige Selbstzentrierung der mit einer Verbindungsanordnung ausgebildeten Stativbeine.

Bei einer Ausgestaltung der vorgenannten Weiterbildungen ist das Verriegelungsstück ein um eine Achse drehbarer flacher Arretierbügel, und die Rastelemente sind als Rastbolzen ausgeführt, die einen endseitigen, radial über einen Schaft vorstehenden Kopf aufweisen, wobei jeder Schaft mit einem Stativbein verbunden ist. Diese Ausgestaltung ist sehr wartungsarm und zuverlässig.

Bei der letztgenannten Ausbildung ist weiterhin zweckmäßig, dass der Arretierbügel mit einem Pedaltritt verbunden ist, so dass der Arretierbügel mit dem Fuß bewegbar ist.

Bei einer weiteren zweckmäßigen Ausgestaltung eines erfindungsgemäßen Stativs sind die Verbindungsanordnung und die Verriegelungsanordnung in dem Stativteller gegenüberliegenden Fußbereichen der Stativbeine angeordnet. Dadurch lässt sich unter Ausnutzen der günstigen Hebelverhältnisse ein mechanisch verhältnismäßig einfacher Aufbau durchführen.

Weitere zweckmäßige Ausgestaltungen und Vorteile der Erfindung sind Gegenstand der nachfolgenden Beschreibung eines Ausführungsbeispieles mit Bezug auf die Figuren der Zeichnung. Es zeigen:
- Fig. 1: in einer perspektivischen Ansicht ein Ausführungsbeispiel eines erfindungsgemäßen Stativs mit drei Stativbeinen in einer Standstellung,
- Fig. 2: in einer perspektivischen Ansicht das Ausführungsbeispiel gemäß Fig. 1 im Fußbereich der Stativbeine mit zwei Stativbeinen in einer räumlich nahe beieinander liegenden Anordnung und dem dritten Stativbein in einer noch von den beiden anderen Stativbeinen beabstandeten Anordnung vor Einnehmen einer Schließstellung,
- Fig. 3: in einer perspektivischen Ansicht das Ausführungsbeispiel gemäß Fig. 1 mit den Stativbeinen in der Schließstellung,
- Fig. 4: in einem Schnitt das Ausführungsbeispiel gemäß Fig. 1 mit den Stativbeinen in der Schließstellung gemäß Fig. 3,
- Fig. 5: in einer perspektivischen Ansicht das Ausführungsbeispiel gemäß Fig. 1 mit den Stativbeinen in der Schließstellung und einem Verriegelungsstück in der Verriegelungsstellung und
- Fig. 6: das Ausführungsbeispiel gemäß Fig. 1 mit dem Verriegelungsstück in einer Freigabestellung.

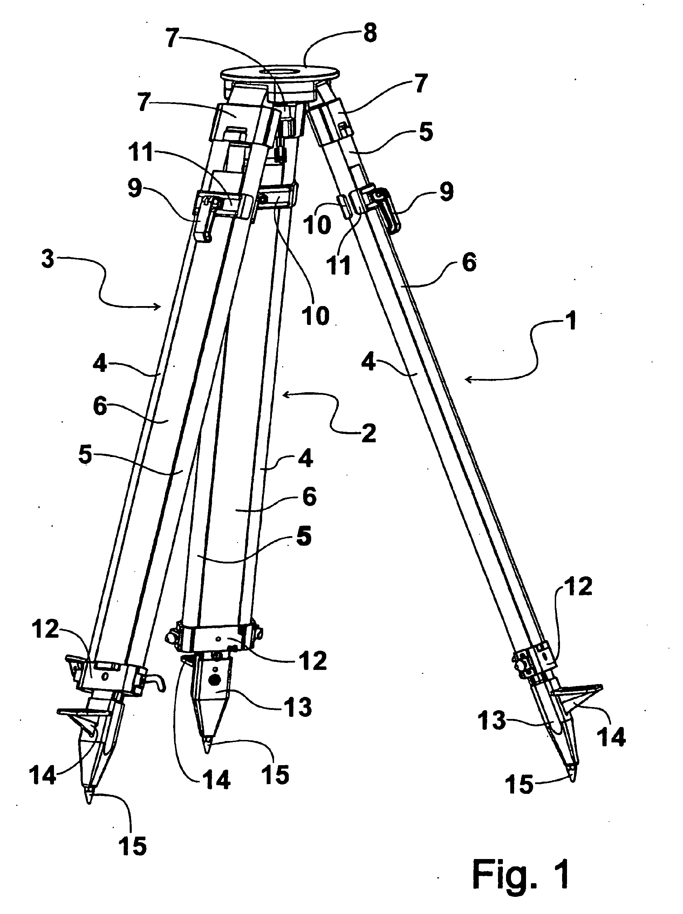

Fig. 1 zeigt in einer perspektivischen Ansicht ein Ausführungsbeispiel eines mit drei Stativbeinen 1, 2, 3 ausgebildeten Stativs. Die Stativbeine 1, 2, 3 sind jeweils mit zwei außenseitigen Außenholmen 4, 5 ausgebildet, zwischen denen ein in Längsrichtung verschiebbarer Innenholm 6 gelagert ist. Die Außenholme 4, 5 sind jeweils über eine kopfseitige Außenholmfassung 7, die die Außenholme 4, 5 fixiert, schwenkbar an einem Stativteller 8 angebracht. An jedem Innenholm 6 ist an dessen dem Stativteller 8 zugewandten Ende ein Klemmhebel 9 angebracht, der auf zwei Klemmplatten 10, 11 einwirkt, die die dem jeweiligen Innenholm 6 benachbarten Außenholme 4, 5 umschließen, um den betreffenden Innenholm 6 in Bezug auf die Außenholme 4, 5 lösbar zu fixieren.

An dem der kopfseitigen Außenholmfassung 7 gegenüberliegenden Ende sind die Außenholme 4, 5 über eine fußseitige Außenholmfassung 12 miteinander verbunden, um diese zusammen mit der kopfseitigen Außenholmfassung 7 in einer parallelen Anordnung zueinander zu halten.

Jeder Innen holm 6 eines Stativbeines 1, 2, 3 weist an seinem dem Klemmhebel 9 abgewandten Ende ein Fußteil 13 auf, das mit einer nach außen vorstehenden Trittplatte 14 und mit einer Aufsetzspitze 15 ausgebildet.ist.

In der Darstellung gemäß Fig. 1 sind die Stativbeine 1, 2, 3 in einer Standstellung angeordnet, in der sie einen verhältnismäßig großen Abstand voneinander aufweisen.

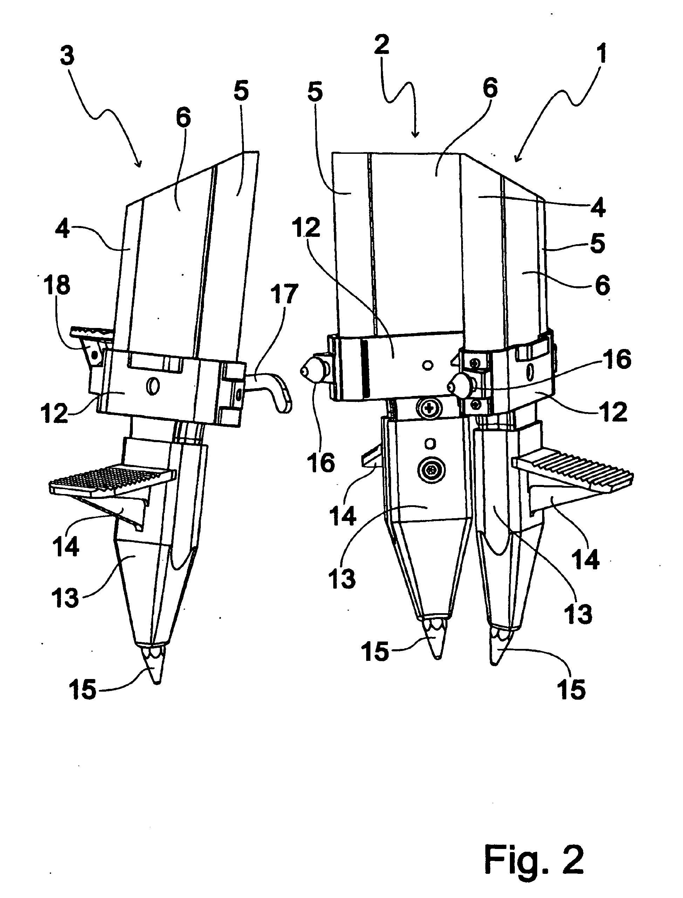

Fig. 2 zeigt das Ausführungsbeispiel eines erfindungsgemäßen Stativs gemäß Fig. 1 im Fußbereich der Stativbeine 1, 2, 3 mit dem ersten Stativbein 1 und mit dem zweiten Stativbein 2 in einer nahe beieinander liegenden Anordnung zum Einnehmen einer Schließstellung, während das dritte Stativbein 3 noch in einem Abstand von dem ersten Stativbein 1 und dem zweiten Stativbein 2 positioniert ist.

Aus Fig. 2 ist ersichtlich, dass das erste Stativbein 1 und das zweite Stativbein 2 jeweils einen Rastbolzen 16 als Rastelement einer Verriegelungsanordnung einer Koppelvorrichtung aufweisen, der an der dem dritten Stativbein 3 zugewandten Seite der jeweiligen fußseitigen Außenholmfassung 12 angebracht ist. Weiterhin lässt sich Fig. 2 entnehmen, dass an dem dritten Stativbein 3 ein Arretierbügel 17 als Verriegelungsstück der Verriegelungsanordnung angebracht ist, der sich in Querrichtung des dritten Stativbeines 3 über die Außenholme 4, 5 hinaus erstreckt und an einem Ende mit einem Pedaltritt. 18 verbunden ist.

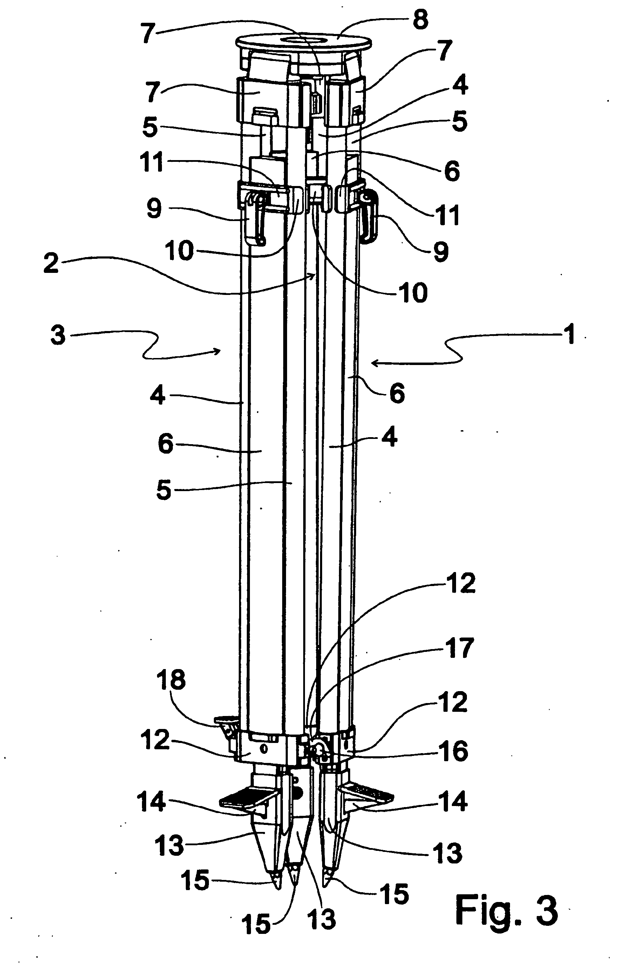

Fig. 3 zeigt in einer perspektivischen Ansicht das Ausführungsbeispiel gemäß Fig. 1 mit den Stativbeinen 1, 2, 3 in der Schließstellung, in der sie alle nahe beieinander angeordnet sind. Aus Fig. 3 ist ersichtlich, dass in der Schließstellung der Stativbeine 1, 2, 3 der Arretierbügel 17 die Rastbolzen 16 hintergreift und somit die Stativbeine 1, 2, 3 miteinander verbindet.

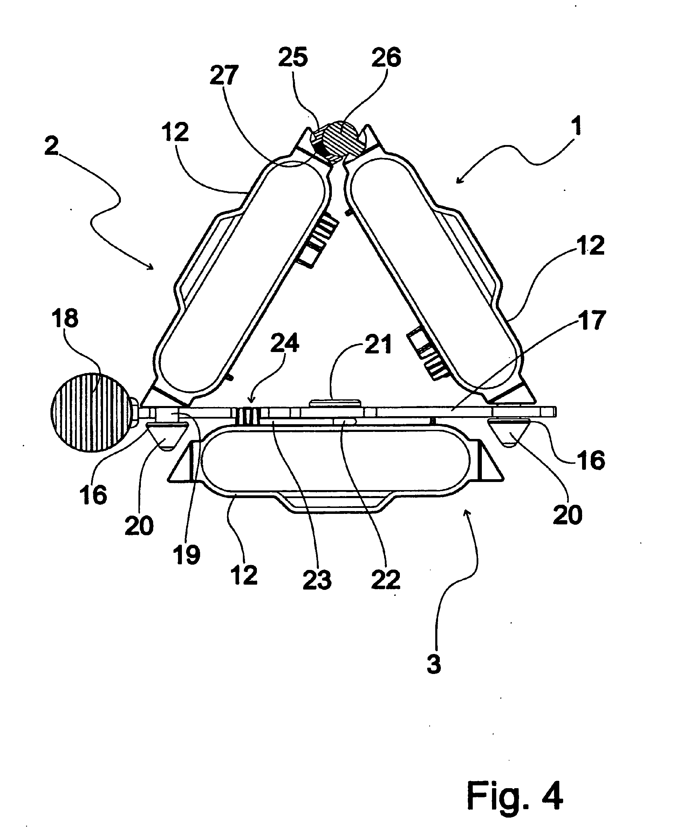

Fig. 4 zeigt in einem Querschnitt das Ausführungsbeispiel gemäß Fig. 1 in der Schließstellung der Stativbeine 1, 2, 3. Aus Fig. 4 lässt sich erkennen, dass jeder Rastbolzen 16 mit einem Schaft 19 an der fußseitigen Außenholmfassung 12 angebracht und mit einem radial über den Schaft 19 vorstehenden Kopf 20 ausgebildet ist, der in der Verriegelungsstellung von dem Arretierbügel 17 hintergriffen ist. Der Arretierbügel 17 ist über eine Achse 21 an der fußseitigen Außenholmfassung 12 drehbar befestigt und über eine Feder 22 in der Schließstellung gehalten, die mit einem Ende um die Achse 21 festgelegt ist und mit einem Federarm 23 an einem an dem Arretierbügel 17 ausgebildeten Federarmanschlag 24 angreift.

Weiterhin lässt sich Fig. 4 entnehmen, dass die Koppelvorrichtung weiterhin mit einer an dem ersten Stativbein 1 und dem zweiten Stativbein 2 ausgebildeten Verbindungsanordnung ausgebildet ist, die über eine bei diesem Ausführungsbeispiel an dem ersten Stativbein 1 angeordnete Kugelpfanne 25 als Gegenstück und einen an dem zweiten Stativbein 2 angebrachten Kugelkopf 26 als Andockstück verfügt. Die Kugelpfanne 25 und der Kugelkopf 26 kommen bei einer räumlich nahe beieinander liegenden Anordnung des ersten Stativbeines 1 und des zweiten Stativbeines 2 selbstzentrierend hintergriffsfrei miteinander in Eingriff und legen das erste Stativbein 1 und das zweite Stativbein 2 gegeneinander fest, so dass durch diesen losen Eingriff das erste Stativbein 1 sowie das zweite Stativbein 2 vorfixiert sind und ein Ausweichen des ersten Stativbeines 1 und des zweiten Stativbeines 2 gegen den Andruck des mit dem Arretierbü-. gel 17 versehenen dritten Stativbeines 3 zum Einnehmen der Schließstellung verhindert ist.

In Fig. 4 ist weiterhin dargestellt, dass die Koppelvorrichtung eine Magneteinrichtung hier in Gestalt von Permanentmagneten 27 aufweist, die vor mechanischen Einflüssen abgeschirmt in die Kugelpfanne 25 integriert sind und magnetisch auf den vollständig aus einem ferromagnetischen Material hergestellten Kugelkopf 26 einwirken, so dass die aus Kugelpfanne 25 und der Kugelkopf 26 unter Verbesserung des Selbstzentrierungseffektes magnetisch miteinander gekoppelt sind.

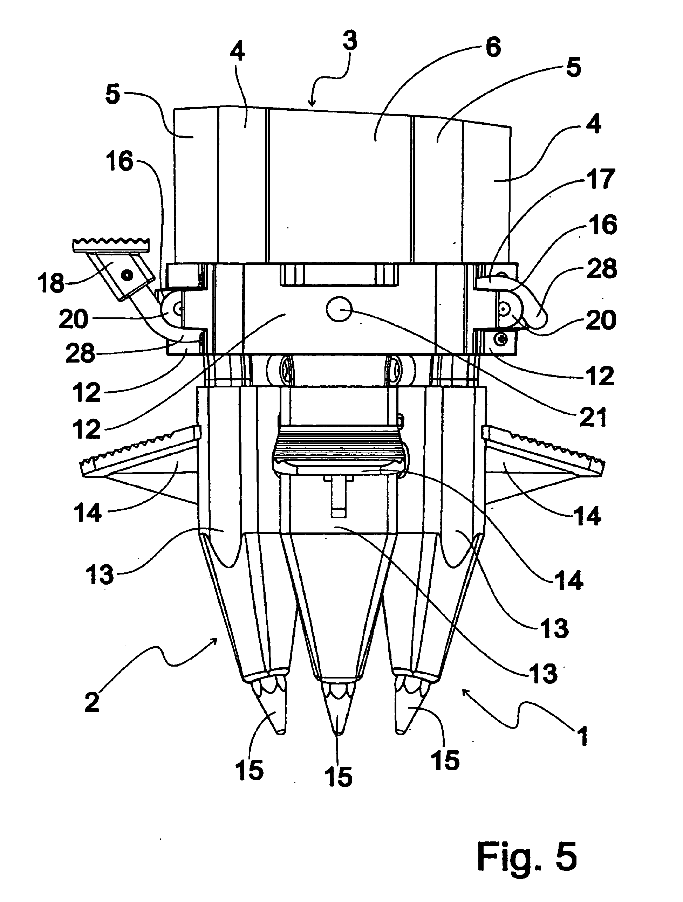

Fig. 5 zeigt in einer Seitenansicht das Ausführungsbeispiel gemäß Fig. 1 im Fußbereich der Stativbeine 1, 2, 3 in der Schließstellung. Aus Fig. 5 ist ersichtlich, dass in der Verriegelungsstellung des mit endseitigen Umbiegungen 28 ausgebildeten Arretierbügels 17 die Köpfe 20 der Rastbolzen 16 dadurch über einen relativ großen Umfangsabschnitt hintergriffen sind, so dass die drei Stativbeine 1, 2, 3 zuverlässig miteinander verriegelt sind.

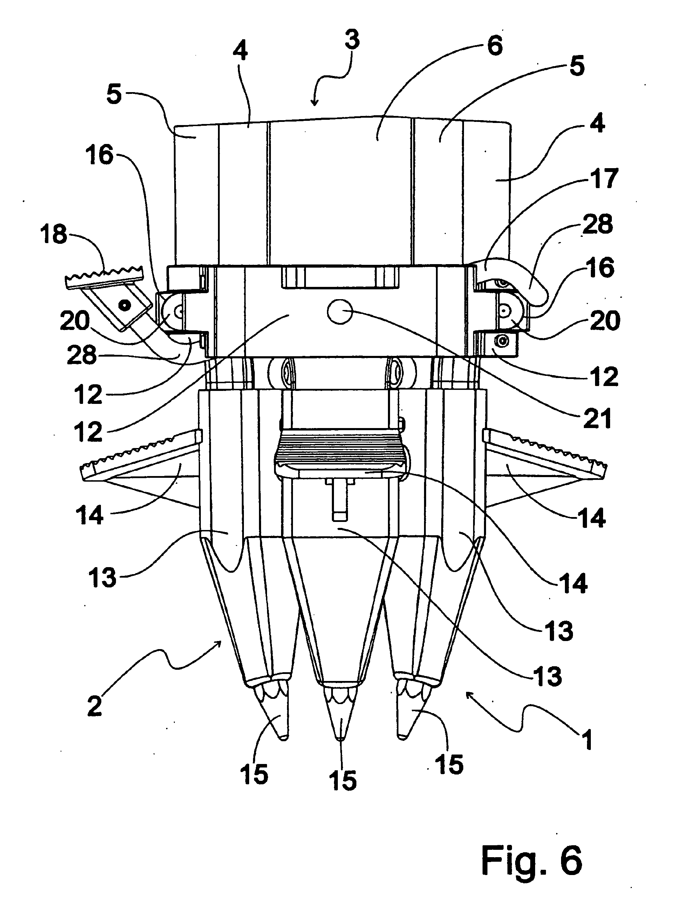

Fig. 6 zeigt das Ausführungsbeispiel eines erfindungsgemäßen Stativs gemäß Fig. 1 mit dem Arretierbügel 17 in einer gegen den Andruck der Feder 22 durch Auftreten auf den Pedaltritt 18 eingenommenen Freigabestellung, in der der Hintergriff der Umbiegungen 27 des Arretierbügels 17 mit den Köpfen 20 der Rastbolzen 16 gelöst ist, so dass die Stativbeine 1, 2, 3 nunmehr reversibel wieder von der Schließstellung gemäß Fig. 3 in die Standstellung gemäß Fig. 1 überführt werden können.

## Patentansprüche

1. Stativ mit drei Stativbeinen (1, 2, 3), die schwenkbar an einem Stativteller (8) angebracht und in einer Schließstellung nahe beieinander angeordnet sowie über eine Koppelvorrichtung miteinander verbunden sind, wobei die Koppelvorrichtung wenigstens eine Verbindungsanordnung mit einem Andockstück (26) und mit einem Gegenstück (25) aufweist, **dadurch gekennzeichnet, dass** mit der Verbindungsanordnung zwei einander benachbarte Stativbeine (1, 2) durch einen hintergriffsfreien Eingriff des Andockstückes (26) sowie des Gegenstückes (25) miteinander verbindbar sind und dass die Koppelvorrichtung über eine Verriegelungsanordnung verfügt, die mit einem an einem weiteren Stativbein (3) angeordneten, zwischen einer Verriegelungsstellung sowie einer Freigabestellung beweglichen Verriegelungsstück (17) und mit Rastelementen (16) ausgebildet ist, die an den dem weiteren Stativbein (3) benachbarten Stativbeinen (1, 2) angeordnet sind und in der Schließstellung der Stativbeine (1, 2, 3) mit dem Verriegelungsstück (17) in dessen Verriegelungsstellung mit einem Hintergriff in Eingriff sind, so dass alle Stativbeine (1, 2, 3) zueinander unbeweglich festgelegt sind.

2. Stativ nach Anspruch 1, **dadurch gekennzeichnet, dass** die Verriegelungsanordnung eine Feder (22) aufweist, die das Verriegelungsstück (17) in der Verriegelungsstellung hält.

3. Stativ nach Anspruch 2, **dadurch gekennzeichnet, dass** das Verriegelungsstück ein um eine Achse (21) drehbarer flacher Arretierbügel (17) ist und dass die Rastelemente als Rastbolzen (16) ausgeführt sind, die einen endseitigen, radial über einen Schaft (19) vorstehenden Kopf (20) aufweisen, wobei jeder Schaft (19) mit einem Stativbein (1, 2) verbunden ist.

4. Stativ nach Anspruch 3, **dadurch gekennzeichnet, dass** der Arretierbügel (17) mit einem Pedaltritt (18) verbunden ist.

5. Stativ nach einem der Ansprüche 1 bis 4, **dadurch gekennzeichnet, dass** die Verbindungsanordnung (25, 26) und die Verriegelungsanordnung (16, 17) in den dem Stativteller (8) gegenüberliegenden Fußbereichen der Stativbeine (1, 2, 3) angeordnet sind.

6. Stativ nach einem der Ansprüche 1 bis 5, **dadurch gekennzeichnet, dass** das Andockstück (26) einen Vorsprung und das Gegenstück (25) eine Aufnahmeausnehmung für den Vorsprung des Andockstücks (26) aufweisen.

7. Stativ nach Anspruch 6, **dadurch gekennzeichnet, dass** das oder jedes Andockstück als ein Kugelkopf (26) und das oder jedes Gegenstück als eine Kugelpfanne (25) ausgebildet sind.

8. Stativ nach einem der Ansprüche 1 bis 7, **dadurch gekennzeichnet, dass** die Koppelvorrichtung eine Magneteinrichtung (27) aufweist, die auf das Andockstück (26) und/oder auf das Gegenstück (25) zum magnetischen Koppeln des Andockstückes (26) und des Gegenstückes (25) einwirkt.

9. Stativ nach Anspruch 8, **dadurch gekennzeichnet, dass** die Magneteinrichtung über wenigstens einen Permanentmagneten (27) verfügt, wobei der oder jeder Permanentmagnet (27) in dem Gegenstück (25) angeordnet ist, und dass das Andockstück (26) ferromagnetische Eigenschaften aufweist.

## Claims

1. Tripod having three tripod legs (1, 2, 3) which are pivotably attached to a tripod plate (8) and, in a closed position, are arranged close to one another and are connected to one another by means of a coupling device, wherein the coupling device has at least one connecting arrangement comprising a docking member (26) and a countermember (25), **characterised in that** two adjacent tripod legs (1, 2) are connectable to one another with the connecting arrangement by means of a rear-grip-free engagement of the docking member (26) and the countermember (25) and that the coupling device has a locking arrangement which is configured with a locking member (17) which is arranged at a further tripod leg (3) and is movable between a locking position and a release position, and with detent elements (16) which are arranged at the tripod legs (1, 2) adjacent to the further tripod leg (3) and, in the closed position of the tripod legs (1, 2, 3), engage with the locking member (17) in the locking position thereof with a rear gripping action, such that all the tripod legs (1, 2, 3) are immovably fixed to one another.

2. Tripod according to claim 1, **characterised in that** the locking arrangement has a spring (22) which holds the locking member (17) in the locking position.

3. Tripod according to claim 2, **characterised in that** the locking member is a flat retaining strap (17) which is rotatable about an axis (21) and that the detent elements are configured as detent bolts (16) which comprise a head (20) arranged at an end side thereof and projecting radially beyond a shaft (19), wherein each shaft (19) is connected to a tripod leg (1, 2).

4. Tripod according to claim 3, **characterised in that** the retaining strap (17) is connected to a pedal (18).

5. Tripod according to one of the claims 1 to 4, **characterised in that** the connecting arrangement (25, 26) and the locking arrangement (16, 17) are arranged in the foot regions of the tripod legs (1, 2, 3) opposing the tripod plate (8).

6. Tripod according to one of the claims 1 to 5, **characterised in that** the docking member (26) has a projection and the countermember (25) has a receiving recess for the projection of the docking member (26).

7. Tripod according to claim 6, **characterised in that** the or each docking member is configured as a ball head (26) and the or each countermember is configured as a ball socket (25).

8. Tripod according to one of the claims 1 to 7, **characterised in that** the coupling device has a magnetic device (27) which acts on the docking member (26) and/or on the countermember (25) for magnetically coupling the docking member (26) and the countermember (25).

9. Tripod according to claim 8, **characterised in that** the magnetic device comprises at least one permanent magnet (27), wherein the or each permanent magnet (27) is arranged in the countermember (25) and the docking member (26) has ferromagnetic properties.

## Revendications

1. Trépied avec trois pieds de trépieds (1, 2, 3) qui sont montés de façon orientable sur une platine de trépied (8) et disposés en position fermée proches les uns des autres et reliés entre eux par un dispositif de couplage, tel que le dispositif de couplage comprend au moins une structure de liaison avec une pièce de butée (26 ) et une contre-pièce (25), **caractérisé en ce qu'**avec la structure de liaison deux pieds de trépied adjacents (1, 2) peuvent être reliés ensemble au moyen d'un engagement entre la pièce de butée (26) et la contre-pièce (25) sans prise arrière, et que le dispositif de couplage comporte un dispositif de verrouillage qui est conçu avec une pièce de verrouillage (17), disposée sur un autre pied de trépied (3) et mobile entre une position de verrouillage et une position de déverrouillage, et avec des éléments d'encliquetage (16) qui sont disposés sur les pieds de trépied (1,2) voisins dudit autre pied de trépied (3) et sont, dans la position fermée des pieds de trépied (1, 2, 3), engagé au moyen d'une prise arrière avec la pièce de verrouillage (17) dans sa position de verrouillage, de sorte que tous les pieds du trépied (1, 2, 3) sont immobilisés de façon fixe les uns par rapport aux autres.

2. Trépied selon la revendication 1, **caractérisé en ce que** le dispositif de verrouillage comprend un ressort (22) qui maintient la pièce de verrouillage (17) dans la position de verrouillage.

3. Trépied selon la revendication 2, **caractérisé en ce que** la pièce de verrouillage est un arceau d'arrêt (17) plat pouvant pivoter autour d'un axe (21) et que les éléments d'encliquetage sont conçus comme des boulons d'arrêt (16) qui présentent une tête terminale (20) dépassant radialement d'une tige (19), chaque tige (19) étant reliée à un pied de trépied (1,2).

4. Trépied selon la revendication 3, **caractérisé en ce que** l'arceau d'arrêt (17) est reliée à une pédale à pied (18).

5. Trépied selon l'une des revendications 1 à 4, **caractérisé en ce que** la structure de liaison (25, 26) et le dispositif de verrouillage (16, 17) sont disposés dans les zones basses des pieds de trépied (1, 2, 3) opposées à la platine de trépied (8).

6. Trépied selon l'une des revendications 1 à 5, **caractérisé en ce que** la pièce de butée (26) présente une saillie et la contre-pièce (25) comporte un évidement de réception pour la saillie de la pièce de butée (26).

7. Trépied selon la revendication 6, **caractérisé en ce que** la ou chaque pièce de butée est conçue comme une tête sphérique (26) et que la ou chaque contre-pièce est conçue comme une cuvette de rotule (25).

8. Trépied selon l'une des revendications 1 à 7, **caractérisé en ce que** le dispositif de couplage comprend un dispositif magnétique (27) qui agit sur la pièce de butée (26) et/ou sur la contre-pièce (25) pour accoupler magnétiquement la pièce de butée (26) et la contre-pièce (25).

9. Trépied selon la revendication 8, **caractérisé en ce que** le dispositif magnétique comporte au moins un aimant permanent (27), le ou chaque aimant permanent (27) étant disposé dans la contre-pièce (25), et que la pièce de butée (26) présente des propriétés ferromagnétiques.
